# FASCICULE DE BREVET EUROPEEN

(11) **EP 4 241 355 B1**
(45) Date de publication et mention de la délivrance du brevet: **01.01.2025**
(21) Numéro de dépôt: 21814829.4
(22) Date de dépôt: 03.11.2021
(51) Int. Cl.: H02H 7/08, B60L 3/00, H02H 7/122, H02P 3/18

(54) **PROCÉDÉ DE PILOTAGE D'UN ONDULEUR ET SYSTÈME CORRESPONDANT**
VERFAHREN ZUR STEUERUNG EINES WECHSELRICHTERS UND ENTSPRECHENDES SYSTEM
METHOD FOR CONTROLLING AN INVERTER AND CORRESPONDING SYSTEM

(30) Priorité: 03.11.2020 FR 2011264
(43) Date de publication de la demande: 13.09.2023
(73) Titulaire: Nidec PSA Emotors, 78955 Carrieres sous Poissy (FR)
(72) Inventeur: YANG, Gang, 92400 COURBEVOIE (FR); AOUSTIN, Loic, 95220 HERBLAY (FR); DAOUDI, Souad, 92310 Sèvres (FR)
(74) Mandataire: VATD
(86) Numéro de dépôt international: PCT/FR2021/051932
(87) Numéro de publication internationale: WO 2022/096818

(56) Documents cités:
- DE-A1- 102012 002 023
- US-A1- 2014 191 700
- US-A1- 2015 214 858
- US-A1- 2016 303 978
- US-A1- 2016 322 927
- US-A1- 2016 380 569

## Description

La présente invention porte sur le pilotage d'un onduleur employé pour contrôler une machine électrique de traction d'un véhicule.

L'onduleur est un appareil permettant, par exemple, de générer un courant alternatif à partir d'un courant continu issu d'une source électrique telle qu'une batterie.

Les onduleurs comportent un étage de puissance comportant par exemple des modules de puissance, et plus généralement l'électronique de puissance de l'onduleur. L'étage de puissance comporte un ensemble d'interrupteurs électroniques. Plusieurs technologies d'interrupteurs électroniques peuvent être utilisées dans un onduleur employé dans un système de traction électrique d'un véhicule, parmi lesquelles :
- les transistors bipolaires à grille isolée, également appelés « IGBT », de l'anglais « Insulated Gate Bipolar Transistor », et
- les transistors à effet de champ à grille isolée également appelés « MOSFET », acronyme anglais de « Metal Oxide Semiconductor Field Effect Transistor », qui peut se traduire par « transistor à effet de champ à structure métal-oxyde-semiconducteur », et en particulier les transistors de puissance au Carbure de Silicium (SiC).

Ainsi, dans un module de puissance, par un jeu de commutations commandées de manière appropriée, on module la source afin d'obtenir un signal alternatif de fréquence désirée.

Le dispositif de commande d'un onduleur est alimenté pour son contrôle généralement par une source électrique dite basse tension, à savoir généralement une tension de l'ordre de 12V dans un véhicule automobile électrique, aussi parfois désignée « LVDC » selon l'acronyme anglais « Low voltage direct current » signifiant courant continu à basse tension. La source électrique à basse tension alimente un circuit basse tension du véhicule.

Le véhicule est par ailleurs équipé d'une source électrique dite haute tension, ou « HVDC » selon l'acronyme anglais « High voltage direct current » signifiant courant continu à haute tension. Cette tension, supérieure à 60V (par exemple de l'ordre de 200V, 400V, ou 800V) correspond notamment à la tension du courant qui est transformé par l'onduleur pour alimenter une machine électrique du véhicule. Plus généralement, la source électrique à haute tension alimente un circuit haute tension du véhicule.

Dans certaines situations, notamment en cas de défaillance de l'alimentation de l'onduleur par le circuit basse tension, le pilotage de l'onduleur est réalisé selon un mode de sécurité. Ainsi, il est généralement prévu deux microcontrôleurs permettant de piloter l'onduleur.

En particulier, un premier microcontrôleur est alimenté par le circuit basse tension, et un deuxième microcontrôleur est alimenté par le circuit haute tension. En fonctionnement nominal, c'est-à-dire lorsque la machine électrique fonctionne comme moteur ou générateur, l'onduleur est piloté par le premier microcontrôleur.

Une perte de l'alimentation basse tension de l'onduleur, qui est utilisée pour son contrôle, peut se produire. La perte de l'alimentation basse tension (12V) entraine l'ouverture du circuit haute tension et le passage dans un mode de sécurité dans lequel le second microcontrôleur prend le relais pour appliquer un mode de fonctionnement de sécurité. Pour cela, le circuit haute tension étant ouvert, le second microcontrôleur est alimenté électriquement par une alimentation auxiliaire (généralement de type « Flyback », parfois traduit par « à transfert indirect »), correspondant à une capacité électrique (typiquement un ou plusieurs condensateurs) interne à l'onduleur.

Deux modes de fonctionnement de sécurité alternatifs peuvent être employés.

Un premier mode est appelé « ASC » selon l'acronyme anglais de « Active Short Circuit » signifiant « court-circuit actif ». L'application de ce mode requiert le pilotage des interrupteurs électroniques (par exemple des IGBT) par le deuxième microcontrôleur.

Ce mode ASC permet de répondre à la problématique qui se pose en cas de perte de contrôle de l'onduleur lorsque la machine électrique tourne à haute vitesse. Sans mode ASC, cette perte de contrôle laisserait les interrupteurs électroniques (par exemple les IGBT) en état ouvert, non conducteur. Cela peut se révéler critique lorsque la machine électrique tourne à haute vitesse, car le rotor induit alors une tension dans les phases du stator pouvant être supérieure au potentiel électrique de l'onduleur. Un courant circule alors dans les diodes des interrupteurs électroniques de puissance et entraine une charge incontrôlée des condensateurs de l'onduleur. Le mode ASC apporte une réponse à cette situation, pour éviter un endommagement de l'onduleur ou de la batterie. Dans ce mode ASC, certains interrupteurs électroniques de l'étage de puissance de l'onduleur, à savoir ceux situés d'un même côté des ponts en H formés dans l'onduleur, sont fermés de sorte qu'ils autorisent le passage d'un courant. Les pôles de la machine électrique (typiquement au nombre de trois pour un moteur à trois phases) sont alors en situation de court-circuit. Ce mode de sécurité est acceptable, pour ce qui concerne le freinage engendré, tant que la vitesse du véhicule (et donc de la machine électrique) est relativement élevée.

Dans le second mode, dit « freewheeling », ce qui signifie « roue-libre », également désigné mode « FW », les interrupteurs électroniques sont tous en état ouvert, et ne permettent donc pas le passage d'un courant. Il en résulte, lorsque la machine électrique est entraînée à haute vitesse de rotation, un courant induit qui traverse les diodes des interrupteurs électroniques et recharge les condensateurs de l'onduleur (comme expliqué ci-dessus). Ce mode est donc normalement réservé aux situations de faible vitesse de rotation de la machine électrique.

Aussi, la sélection du passage en mode ASC, préférable à vitesse élevée, ou en mode FW, préférable à faible vitesse, est opérée selon un seuil prédéfini de vitesse de rotation de la machine électrique. Ainsi, en cas d'événement nécessitant le passage dans un mode de sécurité (par exemple la perte de l'alimentation basse tension) le dispositif de contrôle de l'onduleur peut être configuré pour employer le mode ASC au-dessus d'une certaine vitesse de rotation de la machine électrique, par exemple 2000 tours par minutes, et pour laisser l'onduleur non piloté, c'est-à-dire en mode freewheeling, en dessous de cette vitesse de rotation.

Un tel fonctionnement peut néanmoins se révéler problématique.

En effet, dans une situation de perte de l'alimentation basse tension de l'onduleur contrôlant une machine électrique de traction d'un véhicule roulant à vitesse élevée, le premier microcontrôleur n'est plus alimenté et le contrôle selon un mode de sécurité est alors appliqué par le deuxième microcontrôleur. En l'occurrence, le mode ASC est appliqué. L'alimentation auxiliaire permet d'assurer le fonctionnement en mode de sécurité de l'onduleur, tant que la tension de l'alimentation auxiliaire est suffisante, c'est-à-dire supérieure à une tension minimale de fonctionnement du deuxième microcontrôleur, par exemple de l'ordre de 40V.

Néanmoins, l'application du mode ASC associé avec une fonction de décharge active (généralement désignée par l'expression anglophone « Active Discharge ») entraine une chute progressive de la tension de l'alimentation auxiliaire alimentant le deuxième microcontrôleur. Si la tension chute sous sa tension minimale de fonctionnement alors que la vitesse de rotation de la machine est encore supérieure au seuil prédéfini de vitesse de rotation de la machine électrique pour l'application du mode FW, et que l'alimentation basse tension n'a pas été rétablie entre temps, le mode FW est incidemment appliqué, par absence de pilotage de l'onduleur, car le ni le premier microcontrôleur, ni le deuxième microcontrôleur ne fonctionne faute d'une alimentation électrique suffisante.

Ce faisant, un courant induit par la rotation de la machine électrique est généré comme précédemment expliqué, et provoque une remontée de la tension dans le circuit haute tension de l'onduleur, en particulier dans ses condensateurs.

Cela peut relever la tension au-dessus de ladite tension minimale donnée de l'alimentation auxiliaire. Le deuxième microcontrôleur est alors de nouveau alimenté, et contrôle un passage en mode ASC. De nouveau, cela fait chuter la tension d'alimentation du deuxième microcontrôleur, qui va rapidement se trouver de nouveau sous la tension minimale. Il en résulte un nouveau passage en mode FW, alors que la vitesse de rotation de la machine électrique et potentiellement encore élevée, ce qui va entraîner une remontée de la tension au-dessus de ladite tension minimale, et ainsi de suite.

Il en résulte des commutations rapides et successives avec de forts courants électriques traversant les interrupteurs électroniques de puissance à chacune de leurs fermetures. En effet, à chaque fois que l'onduleur passe en mode ASC, une impulsion de courant est générée, dont la valeur dépend du couple et du régime. Le courant d'impulsion peut être largement supérieur au courant de crête d'une phase en fonctionnement nominal de la machine électrique. Cela entraine une montée en température incontrôlée des interrupteurs électroniques, d'autant qu'un phénomène de cumul de température peut se produire, si la température des interrupteurs ne retombe pas suffisamment entre deux impulsions. Dans des situations extrêmes, une dégradation immédiate des composants par surtension peut se produire lors du redémarrage du second microcontrôleur et du passage en mode ASC.

La présente invention vise à répondre aux problèmes évoqués ci-dessus.

Ainsi, l'invention selon la revendication 1 porte sur un procédé de pilotage d'un onduleur comportant un étage de puissance comportant des interrupteurs électroniques, l'onduleur étant relié à une machine électrique de traction d'un véhicule. Selon un mode de fonctionnement nominal, l'onduleur est piloté par un dispositif de commande alimenté par une alimentation dite basse tension, et lorsqu'une perte de l'alimentation électrique basse tension se produit, l'onduleur est déconnecté d'une alimentation électrique haute tension dont la tension électrique est supérieure à celle de l'alimentation électrique basse tension. Le dispositif de commande est alors alimenté électriquement par une alimentation auxiliaire qui comporte une capacité électrique que comporte l'onduleur. Le dispositif commande applique à l'onduleur un mode de fonctionnement de sécurité parmi :
- un mode de fonctionnement de sécurité dit mode ASC dans lequel certains interrupteurs électroniques de l'onduleur sont fermés de sorte à mettre des phases de la machine électrique en court-circuit, le mode ASC étant associé à une décharge active et ladite capacité électrique; et
- un mode de fonctionnement de sécurité dit mode FW dans lequel tous les interrupteurs électroniques sont ouverts, ce qui met la machine électrique en roue libre, Par exemple, le mode ASC peut être appliqué par défaut, ou si la vitesse de rotation de la machine électrique est supérieure à une vitesse de rotation donnée, et le mode FW est appliqué sinon.

Dans le procédé selon la présente invention, la tension d'entrée de l'alimentation auxiliaire est déterminée tout au long du fonctionnement de l'onduleur selon l'un des modes de fonctionnement de sécurité, et,
a) tandis que le dispositif de commande applique le mode ASC à l'onduleur, si la tension d'entrée de l'alimentation auxiliaire chute sous une tension minimale donnée, ladite tension minimale donnée étant supérieure à une tension minimale de fonctionnement du dispositif de commande, le dispositif de commande applique alors le mode de fonctionnement FW à l'onduleur, et
b) tandis que le dispositif de commande applique le mode FW à l'onduleur, si la tension d'entrée de l'alimentation auxiliaire remonte jusqu'à un seuil de tension prédéfini, le dispositif de commande applique alors le mode de fonctionnement ASC à l'onduleur et l'étape a) est répétée.

Le pilotage en tension de l'onduleur, lorsqu'il fonctionne en mode de sécurité, proposé selon la présente invention permet de protéger les composants de l'étage de puissance de l'onduleur contre une dégradation par échauffement et/ou surtension. En particulier, le passage en mode FW tandis que le dispositif de contrôle est actif car alimenté électriquement par l'alimentation auxiliaire à une tension supérieure à sa tension minimale de fonctionnement permet d'assurer que le deuxième dispositif de contrôle reste actif (au moins pour ce qui concerne les moyens du dispositif de contrôle assurant le pilotage de l'onduleur selon un mode de fonctionnement de sécurité) pendant toute l'application d'un mode de sécurité tandis que la machine électrique tourne à une vitesse importante. En effet, le mode FW, imposé alors que le dispositif de contrôle reste actif, provoquera dans ce cas une remontée de la tension de l'alimentation auxiliaire. Cela permet un pilotage continu de l'onduleur, sans redémarrage incontrôlé des moyens du dispositif de contrôle assurant le pilotage en mode de fonctionnement de sécurité. En outre, cela permet de repasser de manière contrôlée en mode ASC, alors que la tension induite par la machine électrique ne risque pas de provoquer une dégradation des interrupteurs électroniques de l'étage de puissance, mais que le mode FW a été appliqué pendant une durée suffisante pour assurer un refroidissement de l'étage de puissance.

A l'étape b) énoncée ci-dessus, le dispositif de commande peut appliquer le mode de fonctionnement ASC à l'onduleur après l'écoulement d'une durée prédéterminée depuis que le dispositif de commande a commencé à appliquer mode FW à l'onduleur, même si la tension de l'alimentation haute tension ne remonte pas jusqu'au seuil de tension prédéfini. Cette durée prédéterminée peut être de l'ordre de deux fois la constante de temps thermique de l'étage de puissance.

Cela permet de garantir un passage en mode ASC (avec décharge active) pour faire baisser la tension de l'alimentation auxiliaire pour garantir, plus encore qu'avec une décharge passive de la capacité électrique de l'onduleur,la sécurité d'un utilisateur qui serait amené à toucher l'onduleur après l'arrêt du véhicule, alors même que le seuil de tension prédéfini pour commander un tel retour en mode ASC n'est pas atteint. Néanmoins, la durée prédéterminée permet de garantir un refroidissement suffisant de l'étage de puissance dans cette situation. La détermination de la durée en fonction de la constante de temps thermique de l'étage de puissance permet cela. En particulier, la constante de temps correspond à la durée permettant à l'étage de puissance (en particulier à ses interrupteurs électroniques) de retourner à 36,8% de sa température maximale. Avec une durée prédéterminée correspondant à deux fois la constante de temps, l'étage de puissance retourne à 13,5% de sa température maximale. Cela apparait comme un bon compromis entre la durée et le niveau de refroidissement La vitesse de rotation de la machine électrique peut être déterminée tout au long du fonctionnement de l'onduleur selon l'un des modes de fonctionnement de sécurité et à l'étape b) énoncée ci-dessus, le dispositif de commande peut n'appliquer le mode ASC à l'onduleur que si la vitesse de rotation de la machine électrique est supérieure à ladite vitesse de rotation donnée.

Le mode FW est ainsi maintenu lorsque le mode ASC n'est plus avantageux vis-à-vis de la vitesse de rotation de la machine électrique.

De manière non limitative, l'alimentation basse tension peut avoir une tension nominale de l'ordre de 12V, et l'alimentation haute tension peut avoir une tension nominale comprise entre 200V et 800V.

La tension minimale donnée peut être comprise entre 20V et 60V.

Les paramètres ici évoqués à titre non-limitatif correspondent à des applications typiques ou avantageuses de l'invention. D'autres valeurs peuvent être employées sans sortir du cadre de la présente invention.

L'invention porte également sur un système selon la revendication 8 comportant un onduleur relié à une machine électrique de traction d'un véhicule, et un dispositif de commande dudit onduleur, l'onduleur comportant un étage de puissance comportant des interrupteurs électroniques. Le dispositif de commande est relié à une alimentation électrique dite basse tension assurant l'alimentation dudit dispositif de commande dans un mode de fonctionnement nominal. L'onduleur comporte une alimentation auxiliaire qui comporte une capacité électrique et qui est reliée à une alimentation électrique dite haute tension, dont la tension électrique est supérieure à celle de l'alimentation électrique basse tension. Le système objet de la présente invention est configuré de sorte que lorsqu'une perte de l'alimentation électrique basse tension se produit, l'onduleur est déconnecté de l'alimentation électrique haute tension, le dispositif de commande étant alors alimenté par l'alimentation auxiliaire.

Le dispositif de commande est configuré pour appliquer dans ce cas à l'onduleur un mode de fonctionnement de sécurité parmi :
- un mode de fonctionnement de sécurité dit mode ASC dans lequel certains interrupteurs électroniques de l'onduleur sont fermés de sorte à mettre des phases de la machine électrique en court-circuit, associé à une décharge active et ladite capacité électrique, et
- un mode de fonctionnement de sécurité dit mode FW dans lequel tous les interrupteurs électroniques sont ouverts, ce qui met la machine électrique en roue libre. Par exemple, le mode ASC peut être appliqué par défaut, ou si la vitesse de rotation de la machine électrique est supérieure à une vitesse de rotation donnée, et le mode FW est appliqué sinon.

Le système comporte un dispositif de détermination de la tension d'entrée de l'alimentation auxiliaire configuré pour déterminer ladite tension d'entrée de l'alimentation auxiliaire tout au long du fonctionnement de l'onduleur selon un des modes de fonctionnement de sécurité.

Le système est également configuré de sorte que :
a) tandis que le dispositif de commande applique le mode ASC à l'onduleur, si la tension de l'alimentation auxiliaire chute sous une tension minimale donnée, ladite tension minimale donnée étant supérieure à une tension minimale de fonctionnement du dispositif de commande, le dispositif de commande applique alors le mode de fonctionnement FW à l'onduleur, et
b) tandis que le dispositif de commande applique le mode FW à l'onduleur, si la tension d'entrée de l'alimentation auxiliaire remonte jusqu'à un seuil de tension prédéfini, le dispositif de commande applique alors le mode de fonctionnement ASC à l'onduleur et l'étape a) est répétée.

L'invention porte ainsi également sur un système adapté à la mise en oeuvre du procédé précédemment décrit.

Le dispositif de commande du système peut comporter :
- un premier calculateur électronique, alimenté par l'alimentation basse tension, et
- un deuxième calculateur électronique, alimenté par l'alimentation auxiliaire. Notamment :
- le premier calculateur électronique peut être un microcontrôleur, et
- le deuxième calculateur électronique peut être choisi parmi : un deuxième microcontrôleur, un circuit logique programmable, un microprocesseur.

Selon ce mode de réalisation, le premier microcontrôleur assure le pilotage de l'onduleur en mode nominal, et plus généralement lorsqu'il est correctement alimenté par l'alimentation basse tension. Lors d'une perte de l'alimentation basse tension, le deuxième microcontrôleur (ou autre calculateur électronique) assure le pilotage de l'onduleur en mode de fonctionnement de sécurité. Outre le pilotage opéré selon la tension de l'alimentation auxiliaire, le deuxième microcontrôleur permet un pilotage prenant en compte d'autres paramètres, tels que l'écoulement d'une durée prédéterminée en mode FW pour assurer une décharge des condensateurs (i.e. de la capacité électrique) de l'alimentation auxiliaire par sécurité, tout en garantissant un refroidissement suffisant des interrupteurs électroniques.

Alternativement, le dispositif de commande peut comporter :
- un premier microcontrôleur, alimenté par l'alimentation basse tension, et
- un comparateur de tension, alimenté par l'alimentation auxiliaire.

Selon ce mode de réalisation, le premier microcontrôleur assure le pilotage de l'onduleur en mode nominal, et plus généralement lorsqu'il est correctement alimenté par l'alimentation basse tension. Lors d'une perte de l'alimentation basse tension, le pilotage est assuré à l'aide du comparateur de tension, selon la tension de l'alimentation auxiliaire. Ce mode de réalisation permet l'obtention d'une protection de l'onduleur, à un coût faible.

La capacité électrique de l'alimentation auxiliaire peut être formée par un ou plusieurs condensateurs.

Les interrupteurs électroniques peuvent être par exemple des IGBT.

Les onduleurs utilisant des IGBT constituent une application préférentielle de l'invention, notamment du fait de la température maximale admissible pour un IGBT, qui est de l'ordre de 175°C. Néanmoins, la présente invention est applicable à toute technologie, notamment comportant des interrupteurs électroniques de type SiC, avec des paramètres adaptés (la température admissible pour les interrupteurs électroniques SiC est sensiblement supérieure à celle admissible pour les IGBT). L'invention selon la revendication 14 porte enfin sur un véhicule électrique comportant un système tel que précédemment décrit.

L'invention a une application préférentielle dans les véhicules automobiles électriques. D'autres particularités et avantages de l'invention apparaîtront encore dans la description ci-après.

Aux dessins annexés, donnés à titre d'exemples non limitatifs :
la figure 1 représente schématiquement la structure générale d'un dispositif de commande d'un onduleur,
la figure 2 représente, par un ensemble de graphiques, certains paramètres d'un onduleur et d'une machine électrique équipant un véhicule, lors d'une perte de l'alimentation basse tension, avec un pilotage de l'onduleur selon l'art antérieur ;
la figure 3 représente, selon un logigramme, un procédé de pilotage d'un onduleur conforme à un mode de réalisation de l'invention ;
la figure 4 représente, par un ensemble de graphiques analogues à ceux de la figure 2, certains paramètres d'un onduleur et d'une machine électrique équipant un véhicule, lors d'une perte de l'alimentation basse tension, avec un pilotage de l'onduleur selon le mode de réalisation de l'invention de la figure 3 ;
la figure 5 représente, selon un logigramme, un procédé de pilotage d'un onduleur conforme à un deuxième mode de réalisation de l'invention ;
la figure 6 représente, par un ensemble de graphiques analogues à ceux des figures 2 et 4, certains paramètres d'un onduleur et d'une machine électrique équipant un véhicule, lors d'une perte de l'alimentation basse tension, avec un pilotage de l'onduleur selon le mode de réalisation de l'invention de la figure 5 ;
la figure 7 représente schématiquement la structure générale d'un dispositif de commande d'un onduleur, selon un mode de réalisation simplifié pouvant être utilisé dans un mode de réalisation de l'invention ;
la figure 8 représente, selon un logigramme, un mode de réalisation de l'invention compatible de la structure de dispositif de pilotage présentée à la figure 5.

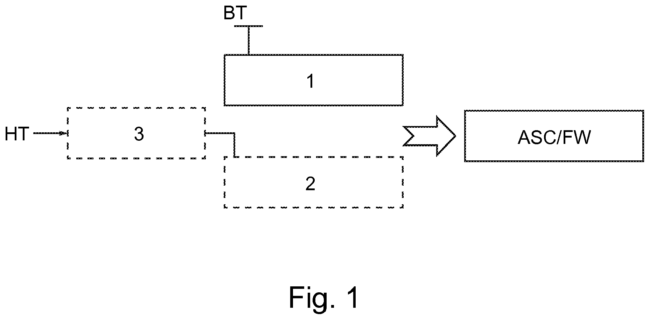

La figure 1 représente schématiquement la structure générale d'un dispositif de commande d'un onduleur. Le dispositif de commande comporte un premier microcontrôleur 1 et un deuxième microcontrôleur 2. Le premier microcontrôleur 1 est alimenté par une alimentation dite basse tension BT. L'alimentation basse tension est une alimentation en courant continu, et comporte généralement une batterie, typiquement une batterie 12V. Lors du fonctionnement en mode nominal de l'onduleur, c'est-à-dire lorsqu'aucun événement tel qu'une défaillance ne nécessite un fonctionnement selon un mode de fonctionnement de sécurité, le premier microcontrôleur assure le pilotage de l'onduleur.

Le deuxième microcontrôleur 2 est alimenté électriquement par une alimentation auxiliaire 3. L'alimentation auxiliaire est elle-même pourvue en électricité par une alimentation haute tension HT. L'alimention haute tension HT peut notamment comprendre une batterie de traction d'un véhicule électrique, et peut donc présenter, de manière non limitative, une tension comprise entre 200V et 800V (correspondant à la tension nominale de la batterie ou autre sourrce d'énergie électrique du véhicule équipé).

Le premier microcontrôleur et le deuxième microcontrôleur du dispositif de commande constituent donc collectivement un dispositif de contrôle permettant d'appliquer un mode de fonctionnement de sécurité à l'onduleur (en particulier le mode ASC ou le mode FW décrits précédemment).

En pratique, le deuxième microcontrôleur 2 n'est démarré et utilisé qu'en cas d'incapacité pour le premier microcontrôleur d'assurer le pilotage de l'onduleur, selon un mode nominal ou un mode de sécurité. Cela peut se produire en cas de défaillance du premier microcontrôleur 1 à proprement parler, mais aussi lorsque l'alimentation basse tension dudit premier microcontrôleur 1 est perdue.

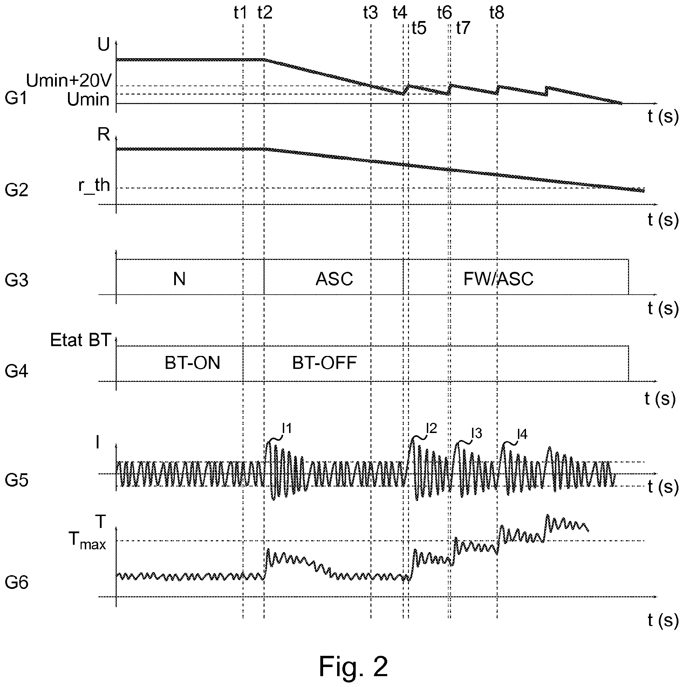

Une telle situation est illustrée sur la figure 2.

La figure 2 présente un ensemble de graphiques, G1...G6 qui représentent chacun un paramètre du système de pilotage d'un onduleur comportant un dispositif de pilotage tel que celui représenté à la figure 1. La figure 2 correspond au pilotage généralement mis en oeuvre antérieurement à la présente invention.

Ainsi, à la figure 2 :
- G1 représente l'évolution temporelle de la tension U de l'alimentation auxiliaire 3 ;
- G2 représente l'évolution temporelle de la vitesse de rotation de la machine électrique ;
- G3 représente le mode de fonctionnement appliqué à l'onduleur dans le temps;
- G4 représente l'état de l'alimentation basse tension dans le temps ;
- G5 représente l'évolution temporelle de l'intensité du courant électrique dans une phase ;
- G6 représente l'évolution temporelle de la température des interrupteurs de l'étage de puissance de l'onduleur.

Ainsi, selon le scénario représenté à la figure 2, à un instant t1, et comme cela est représenté au graphique G4, l'alimentation basse tension BT est perdue. Par perte de l'alimentation basse tension BT, on entend l'absence totale d'alimentation, ou l'absence d'alimentation à une tension suffisante. L'alimentation basse tension passe alors d'un état de disponibilité BT-ON à un état d'indisponibilité BT-OFF. Cette perte de l'alimentation basse tension peut correspondre à une défaillance (mauvais contact électrique, rupture de circuit, déclenchement inopiné d'un contacteur, défaillance de la batterie basse tension etc.) ou à un déclenchement d'un contacteur du circuit basse tension (par exemple consécutivement à une détection d'accident).

La perte de l'alimentation basse tension a pour première conséquence l'ouverture d'un contacteur du circuit haute tension, ce qui déconnecte l'onduleur de l'alimentation haute tension et empêche donc notamment son alimentation par l'alimentation haute tension.

Le pilotage de l'onduleur est néanmoins assuré par le deuxième microcontrôleur 2 à partir de l'instant t2, grâce à l'alimentation auxiliaire 3. L'écart temporel entre t1 et t2 est bref et correspond à la durée nécessaire au deuxième microprocesseur pour s'activer.

Comme montré au graphique G3, le fonctionnement en mode nominal N (fonctionnement normal en mode moteur ou générateur de la machine électrique) n'est ainsi pas poursuivi, et un mode de fonctionnement de sécurité est alors appliqué à l'onduleur par le deuxième microprocesseur.

La vitesse de rotation de la machine électrique est déterminée, et, dans la mesure où elle est supérieure à une vitesse de rotation donnée r_th, comme montré au graphique G2, le mode ASC est appliqué (voir graphique G3) dès l'instant t2. Il se produit alors une impulsion de courant I1 dans les phases de la machine électrique, représentée au graphique G5, et en conséquence dans les interrupteurs électroniques de l'onduleur qui sont en position fermée (laissant passer le courant). Cette impulsion de courant électrique provoque un échauffement soudain des interrupteurs de l'onduleur, comme cela est représenté au graphique G6.

Le mode ASC est poursuivi, dans la mesure où la vitesse de rotation R de la machine électrique reste supérieure à la vitesse de rotation donnée r_th. La vitesse de rotation donnée r-th peut par exemple être comprise entre 1000 tr/min et 3000 tr/min, et préférentiellement être de l'ordre de 2000 tr/min. Le fonctionnement du deuxième microprocesseur fait néanmoins chuter progressivement la tension U d'entrée de l'alimentation auxiliaire 3. Rappelons que l'alimentation auxiliaire 3 est généralement de type « Flyback » et correspond à une capacité électrique interne de l'onduleur, c'est-à-dire en pratique généralement à un ou plusieurs condensateurs.

Or, le deuxième microcontrôleur 2 reste actif, c'est-à-dire allumé et apte à piloter l'onduleur, seulement s'il est alimenté sous une tension suffisante. Pour l'exemple, considérons que le deuxième microcontrôleur reste actif s'il est alimenté sous plus de 40V. A un instant t3, la tension d'entrée de l'alimentation auxiliaire 3 passe sous un premier seuil de tension, typiquement de 60V, pouvant correspondre à un seuil de dangerosité pour l'Homme en cas d'électrocution. La chute de la tension de l'alimentation auxiliaire 3 se poursuit jusqu'à atteindre la tension minimale de fonctionnement du deuxième microprocesseur Umin à un instant t4. A cet instant le deuxième microprocesseur 2 cesse de fonctionner. L'onduleur passe alors incidemment en mode de fonctionnement FW par absence de pilotage (les interrupteurs électroniques de l'onduleur sont ouverts, c'est-à-dire qu'ils ne permettent pas le passage de courant, en l'absence de pilotage).

Dans le mode FW, un courant est induit par la rotation de la machine électrique, et provoque une remontée de la tension dans la partie du circuit haute tension de l'onduleur, et donc dans les condensateurs de l'onduleur et plus généralement dans l'alimentation auxiliaire. Cela peut entrainer une élévation de la tension au-dessus de ladite tension minimale donnée de l'alimentation auxiliaire. A un instant t5, la tension atteint une tension d'activation du deuxième microcontrôleur, par exemple de l'ordre de 60v. Le deuxième microcontrôleur 2 est alors redémarré rapidement, et la vitesse de rotation de la machine électrique étant toujours supérieure à la vitesse de rotation donnée r_th, le deuxième microcontrôleur 2 applique de nouveau le mode ASC, sensiblement dès l'instant t5. Il en résulte une nouvelle impulsion de courant I2, ayant pour effet un nouvel échauffement des interrupteurs électroniques.

La nouvelle phase de fonctionnement en mode ASC démarre donc avec une tension dans l'alimentation auxiliaire peu supérieure à la tension minimale de fonctionnement Umin du deuxième microprocesseur. La tension chute de nouveau en mode ASC et après une période relativement courte, a un instant t6 la tension U dans le bus de l'alimentation auxiliaire 3 chute de nouveau au niveau tension minimale de fonctionnement du deuxième microprocesseur Umin. Le deuxième microprocesseur s'arrête de fonctionner. Il en résulte un nouveau passage en mode FW qui va provoquer la remontée de la tension dans l'alimentation auxiliaire jusqu'à provoquer un redémarrage du deuxième microprocesseur, et un nouveau passage en mode ASC ainsi qu'une troisième impulsion de courant I3 à un instant t7 et ainsi de suite (période d'alternance FW/ASC représentée au graphique G3).

Or, les interrupteurs de puissance se refroidissent peu ou pas lors des phases de fonctionnement en mode ASC, et le mode de fonctionnement FW a une durée très brève de sorte que cette durée ne permet pas un refroidissement significatif de ses interrupteurs.

Il en résulte un effet cumulatif de température au niveau de l'étage de puissance de l'onduleur. Dans l'exemple ici représenté à titre de simple illustration, une température maximale admissible Tmax des interrupteurs de puissance est atteinte et dépassée dès la quatrième impulsion de courant I4.

Les interrupteurs peuvent alors être endommagés par la température. A titre d'exemple, la température maximale admissible Tmax est de l'ordre de 175°C pour des IGBT.

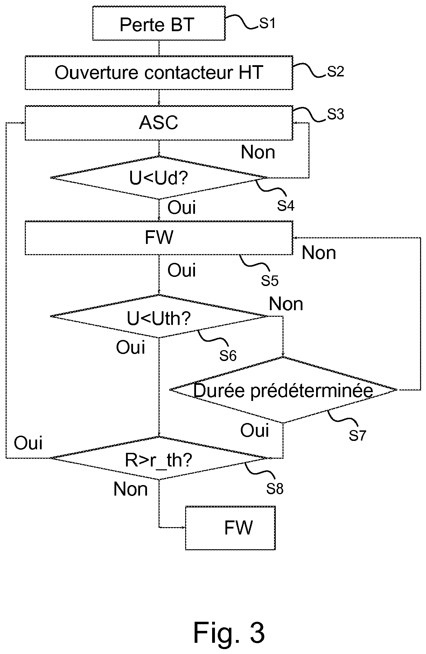

La figure 3 représente un procédé de pilotage d'un onduleur conforme à un mode de réalisation de l'invention. Dans une première étape S1, une perte de l'alimentation basse tension se produit. Il en résulte l'ouverture du contacteur du circuit haute tension (deuxième étape S2).

Le mode de réalisation de l'invention décrit ici emploie un dispositif de commande tel que celui qui a été décrit en référence à la figure 1. Néanmoins, le premier microcontrôleur et le deuxième microcontrôleur peuvent être remplacés, sans sortir du cadre de la présente invention, par tout calculateur électronique adapté, par exemple un circuit logique programmable, un microprocesseur, etc. (ce qui est également le cas pour les autres modes de réalisation décrits ci-après).

Dans une troisième étape S3, le mode ASC est appliqué à l'onduleur. Il en résulte une décharge progressive de l'alimentation auxiliaire. Dans une quatrième étape S4 de comparaison, on compare la tension d'entrée de l'alimentation auxiliaire U (par exemple mesurée sur un bus haute tension de l'onduleur) à une tension minimale donnée Ud, qui est néanmoins supérieure à la tension minimale de fonctionnement du deuxième microprocesseur Umin.

Tant que la tension de l'alimentation auxiliaire U et du bus haute tension de l'onduleur reste supérieure à la tension minimale donnée Ud, le mode ASC est maintenu. Mais dès que la tension de l'alimentation auxiliaire U devient inférieure à la tension minimale donnée Ud, le deuxième microprocesseur applique le mode FW à l'onduleur (cinquième étape S5).

La tension remonte alors dans l'alimentation auxiliaire.

Dans une sixième étape S6, la tension de l'alimentation auxiliaire U est comparée à un seuil de tension prédéfini Uth. Le mode FW est poursuivi tant que l'une des conditions suivantes n'est pas atteinte :
- la tension d'entrée de l'alimentation auxilaire U dépasse le seuil de tension prédéfini Uth ;
- une durée prédéterminée s'est écoulée depuis le passage en mode FW (évalué dans une septième étape S7). En particulier, la durée prédéterminée peut être choisie en fonction de la constante de temps thermique τ de l'étage de puissance, et peut notamment être égale à ou de l'ordre de deux fois la constante de temps thermique τ.

Lorsque l'une de ces conditions est remplie, on compare la vitesse de rotation R de la machine électrique à la vitesse de rotation donnée r_th (huitième étape S8). Si la vitesse de rotation R n'est plus supérieure à la vitesse de rotation donnée, le mode ASC ne s'impose plus et le mode FW est maintenu de façon pérenne. Si la vitesse de roation R est toujours supérieure à la vitesse de rotation donnée, le procédé retourne à la troisième étape S3 et le mode ASC est appliqué à l'onduleur.

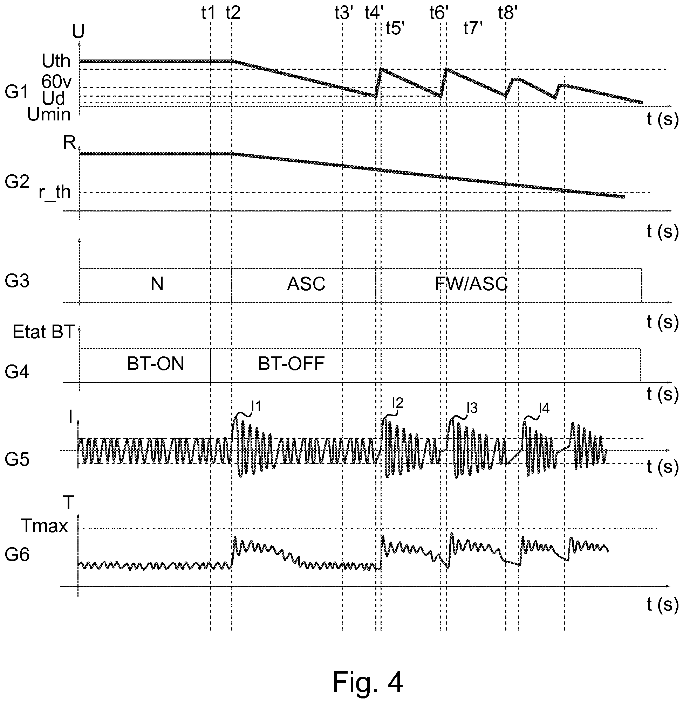

La figure 4 représente, par un ensemble de graphiques analogues à ceux de la figure 2, certains paramètres d'un onduleur et d'une machine électrique équipant un véhicule, lors d'une perte de l'alimentation basse tension, avec un pilotage de l'onduleur selon le mode de réalisation de l'invention décrit en référence à la figure 3. En particulier, sur la figure 4, les graphiques G1 à G6 illustrent respectivement les mêmes paramètres que les graphiques G1 à G6 de la figure 2.

La première partie du scénario représenté à la figure 4 se déroule de manière identique à celui représenté à la figure 2. Ainsi, à un instant t1, l'alimentation basse tension BT est perdue. L'alimentation basse tension passe donc d'un état de disponibilité BT-ON à un état d'indisponibilité BT-OFF.

La perte de l'alimentation basse tension a pour première conséquence l'ouverture d'un contacteur du circuit haute tension, ce qui empêche donc notamment l'alimentation de l'onduleur par l'alimentation haute tension.

Le dispositif de contrôle de l'onduleur, en particulier le deuxième microcontrôleur 2 est alimenté par l'alimentation auxiliaire 3 et s'active de sorte à piloter l'onduleur à partir de l'instant t2.

Le fonctionnement en mode nominal N n'est ainsi pas poursuivi, et un mode de fonctionnement de sécurité est alors appliqué à l'onduleur par le deuxième microprocesseur.

La vitesse de rotation de la machine électrique est déterminée, et, dans la mesure où elle est supérieure à la vitesse de rotation donnée r_th, le mode ASC est appliqué dès l'instant t2. Il se produit alors une impulsion de courant I1. Cette impulsion de courant électrique provoque un échauffement soudain des interrupteurs électroniques de l'onduleur.

Le mode ASC est poursuivi, ce qui fait chuter progressivement la tension U d'entrée de l'alimentation auxiliaire 3.

Contrairement au procédé de contrôle de la figure 2, le mode ASC n'est néanmoins pas poursuivi jusqu'à extinction du deuxième microcontrôleur du fait d'une tension d'alimentation insuffisante (c'est-à-dire inférieure à sa tension minimale de fonctionnement Umin). Ainsi, dans le mode de réalisation représenté, dès que la tension U d'entrée de l'alimentation auxiliaire (correspondant plus généralement à la tension du bus haute tension de l'onduleur) devient inférieure à une tension minimale donnée Ud, néanmoins supérieure à la tension minimale de fonctionnement Umin, à un instant t4', le mode FW est appliqué à l'onduleur. A l'instant t4', le dispositif de contrôle de l'onduleur (et plus particulièrement le deuxième microcontrôleur dudit dispositif de contrôle) est donc actif car alimenté sous une tension supérieure à sa tension minimale de fonctionnement Umin. A titre de simples exemples, si Umin = 40V, Ud peut être de l'ordre de 45V, ou encore, si Ud est de l'ordre de 40V, un deuxième microcontrôleur fonctionnant tant qu'il est alimenté sous plus de 30V peut être utilisé. Bien évidemment, selon la tension minimale de fonctionnement du deuxième microtrôleur, la tension minimale donnée peut être adaptée. Elle peut être égale, par exemple et ne manière non-exhaustive, à : 10V, 12V, 18V, 20V, 30V, 40V.

L'application du mode FW induit un courant dans la machine électrique et dans l'onduleur, et provoque une remontée de la tension dans la partie du circuit haute tension de l'onduleur (bus haute tension), et donc dans les condensateurs de l'onduleur.

Le mode FW est appliqué jusqu'à ce que la tension U atteigne le seuil de tension prédéfini Uth, à un instant t5'. A l'instant t5', le deuxième microcontrôleur commande l'application du mode ASC. Le seuil de tension prédéfini Uth est sélectionné de sorte à être suffisamment élevé, sans dépasser la tension admissible par les composants de l'onduleur et plus généralement du système électrique mis en oeuvre, de sorte qu'il permet l'écoulement d'un temps entre t4' et t5' suffisamment long pour permettre un refroidissement significatif de l'étage de puissance de l'onduleur, et en particulier des interrupteurs électroniques qu'il comporte.

La nouvelle phase de fonctionnement en mode ASC démarre donc à l'instant t5'. Il en résulte une nouvelle impulsion de courant I2, ayant pour effet un nouvel échauffement des interrupteurs électroniques de l'étage de puissance.

Le mode ASC est poursuivi tant que la tension d'entrée de l'alimentation auxiliaire est supérieure à la tension minimale donnée Ud.

Dès que la tension U d'entrée de l'alimentation auxiliaire devient inférieure à la tension minimale donnée Ud, à un instant t6', le mode FW est appliqué. Le deuxième microcontrôleur est alors toujours actif.

Le mode FW est poursuivi jusqu'à ce que la tension de la batterie atteigne le seuil de tension prédéfini Uth, à un instant t7'. Le mode ASC sera alors de nouveau appliqué.

Tout comme dans l'art antérieur, il y a donc une alternance dans l'application des modes ASC et FW. Néanmoins, contrairement à ce qui peut se passer dans un procédé de contrôle selon l'art antérieur, le dispositif de commande de l'onduleur, et en particulier le deuxième microtrôleur reste toujours actif, de sorte que le passage en mode FW ne résulte pas d'un arrêt du deuxième microcontrôleur mais d'un pilotage volontaire selon la tension de l'alimentation auxiliaire et plus généralement du bus haute tension de l'onduleur. Il en résulte que le mode FW n'est pas quitté suite à un redémarrage du deuxième microcontrôleur. En particulier, le mode FW est piloté selon la tension de l'alimentation auxiliaire et du bus haute tension de l'onduleur, avec un critère de tension à atteindre. Il en résulte une durée plus grande d'application du mode FW, tout en évitant toute surtension.

En particulier, la durée de maintien en mode FW, entre t4' et t5', entre t6' et t7' permet un refroidissement qui limite ou évite l'effet de cumul de température dans l'étage de puissance. En outre, la décharge de la capacité qui est réalisée en mode ASC avec décharge active débute à une tension correspondant au seuil de tension Uth qui est plus élevée que la tension de reveil du deuxième microcontrôleur, de sorte que ladite décharge de la capacité débute à une tension supérieure à la tension en début de mode ASC dans un procédé de contrôle conforme à l'état de la technique. Il en résulte que la durée entre t5' et t6' est plus grande qu'entre t5 et t6, de sorte que le courant impulsionel a plus de temps que dans l'art antérieur pour se stabiliser à niveau de courant faible. Cela est également favorable pour éviter le cumul de température.

Dans l'exemple représenté à la figure 4, à un instant t8' la tension chute sous la tension minimale donnée Ud, et le mode FW est appliqué. Néanmoins, la vitesse de la machine électrique ayant diminué, tout en restant supérieure à la vitesse de rotation donnée r_th, le courant induit par la machine électrique en mode FW ne suffit plus à atteindre le seuil de tension prédéfini Uth, ou, à tout le moins, une durée suffisante à assurer un bon refroidissement de l'étage de puissance se sera écoulé bien avant l'atteinte de Uth. Dans ces conditions, le procédé selon le mode de réalisation ici représenté prévoit le passage en mode ASC selon une condition alternative à l'atteinte du seuil de tension prédéfini. Cette condition alternative est l'écoulement d'une durée prédéterminée depuis le passage en mode FW, par exemple de l'ordre de deux fois la constante de temps thermique de l'étage de puissance τ, comme cela a été expliqué en référence à la figure 3. Ce passage en mode ASC permet une décharge des condensateurs de l'onduleur à un niveau garantissant la sécurité d'une personne qui viendrait toucher l'onduleur après l'arrêt du véhicule équipé.

Comme montré au graphique G6, l'application du procédé objet de la figure 3 permet de ralentir ou d'éviter la montée en température de l'étage de puissance de l'onduleur et en particulier de ses interrupteurs électroniques, en permettant un refroidissement suffisant entre les montées en température.

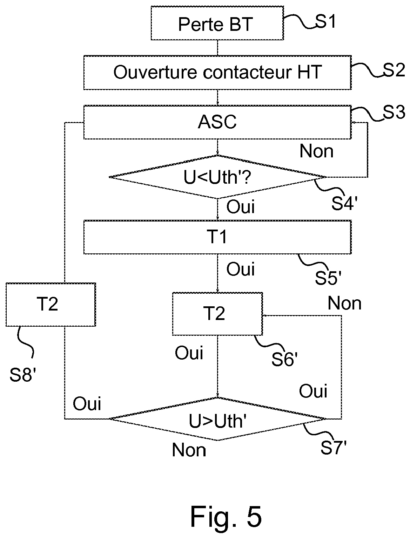

La figure 5 représente un deuxième mode de réalisation de l'invention, fondé sur les mêmes principes que le mode de réalisation des figures 3 et 4, mais qui est plus simple à mettre en oeuvre.

La figure 5 représente plus précisément un procédé de pilotage d'un onduleur conforme à ce deuxième mode de réalisation de l'invention. Dans une première étape S1, une perte de l'alimentation basse tension se produit. Il en résulte l'ouverture du contacteur du circuit haute tension (deuxième étape S2).

Dans une troisième étape S3, le mode ASC est appliqué à l'onduleur. Il en résulte une décharge progressive de l'alimentation auxiliaire. Dans une quatrième étape S4' de comparaison, on compare la tension d'entrée de l'alimentation auxiliaire U (par exemple mesurée sur un bus haute tension de l'onduleur) à un seuil unique de tension Uth'. En pratique, la tension de l'alimentation auxiliaire U peut être déterminée en permanence.

Tant que la tension de l'alimentation auxiliaire U et du bus haute tension de l'onduleur reste supérieure au seuil unique de tension Uth', le mode ASC est maintenu. Lorsque la tension de l'alimentation auxiliaire U devient inférieure au seuil unique de tension Uth', le deuxième microprocesseur maintient le mode ASC pendant l'écoulement d'une première période prédéfinie T1 (cinquième étape S5'). Ainsi, la tension de l'alimentation auxiliaire continue de diminuer jusqu'à une tension minimale pendant un temps maîtrisé, choisi selon les caractéristiques de la machine électrique et de l'onduleur de sorte que la tension de l'alimentation auxiliaire reste au dessus de la tension minimale de fonctionnement Umin.

Lorsque la première période prédéfinie T1 est écoulée, le mode FW est appliqué à l'onduleur (étape S6').

La tension remonte alors dans l'alimentation auxiliaire.

On compare alors la tension d'entrée de l'alimentation auxiliaire U au seuil unique de tension Uth (étape S7').

Tant que la tension de l'alimentation auxiliaire U et du bus haute tension de l'onduleur reste inférieure au seuil unique de tension Uth', le mode FW est maintenu.

Lorsque la tension de l'alimentation auxiliaire U devient égale ou supérieure au seuil unique de tension Uth', le deuxième microprocesseur maintient le mode FW pendant l'écoulement d'une deuxième période prédéfinie T2 (étape S8'). Lorsque la deuxième période prédéfinie T2 est écoulée, le mode ASC est de nouveau appliqué à l'onduleur (le procédé retourne pour cela à l'étape S3). Le mode FW est ainsi appliqué pendant une durée maitrisée, suffisamment courte pour éviter toute surtension mais suffisante pour permettre une remontée de la tension de l'alimentation auxilaire à un niveau seuil de la tension qui permet l'application suivante du mode ACS pendant un temps suffisamment long et éviter l'accumulation de température liée à de trop nombreuses alternances entre les modes FW et ASC, et tout en maintenant les systèmes de contrôles du système en activité.

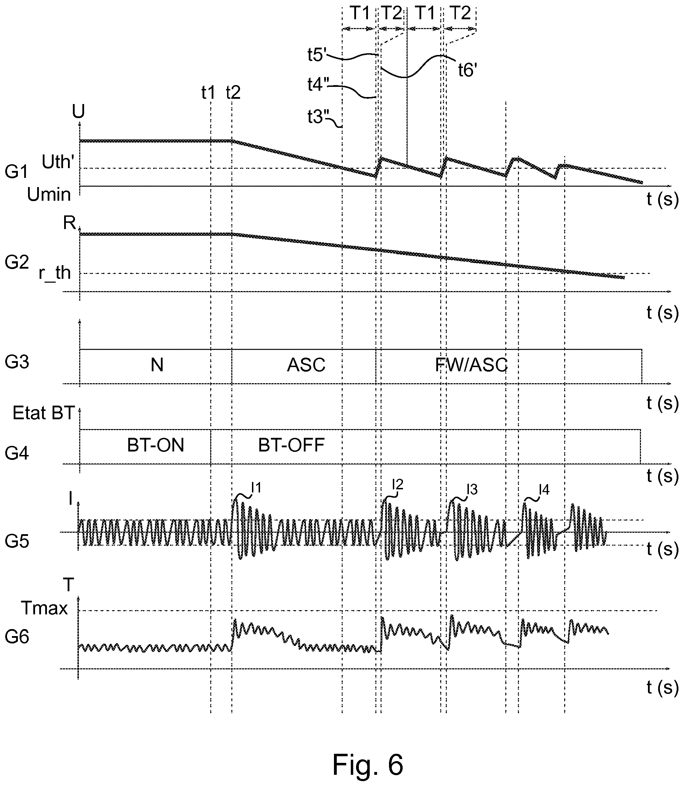

La figure 6 représente, par un ensemble de graphiques analogues à ceux des figures 2 et 4, certains paramètres d'un onduleur et d'une machine électrique équipant un véhicule, lors d'une perte de l'alimentation basse tension, avec un pilotage de l'onduleur selon le deuxième mode de réalisation de l'invention décrit en référence à la figure 5.

En particulier, sur la figure 6, les graphiques G1 à G6 illustrent respectivement les mêmes paramètres que les graphiques G1 à G6 des figures 2 et 4.

La première partie du scénario représenté à la figure 6 se déroule de manière identique à ceux représentés aux figures 2 et 4. Ainsi, à un instant t1, l'alimentation basse tension BT est perdue. L'alimentation basse tension passe donc d'un état de disponibilité BT-ON à un état d'indisponibilité BT-OFF.

La perte de l'alimentation basse tension a pour première conséquence l'ouverture d'un contacteur du circuit haute tension, ce qui empêche donc notamment l'alimentation de l'onduleur par l'alimentation haute tension.

Le dispositif de contrôle de l'onduleur, en particulier le deuxième microcontrôleur 2 est alimenté par l'alimentation auxiliaire 3 et s'active de sorte à piloter l'onduleur à partir de l'instant t2.

Le fonctionnement en mode nominal N n'est ainsi pas poursuivi, et un mode de fonctionnement de sécurité est alors appliqué à l'onduleur par le deuxième microprocesseur.

La vitesse de rotation de la machine électrique est déterminée, et, dans la mesure où elle est supérieure à la vitesse de rotation donnée r_th, le mode ASC est appliqué dès l'instant t2. Il se produit alors une impulsion de courant I1. Cette impulsion de courant électrique provoque un échauffement soudain des interrupteurs électroniques de l'onduleur.

Le mode ASC est poursuivi, ce qui fait chuter progressivement la tension U d'entrée de l'alimentation auxiliaire 3.

Lorsque que la tension U d'entrée de l'alimentation auxiliaire (correspondant plus généralement à la tension du bus haute tension de l'onduleur) devient inférieure à une certaine tension prédéterminée et désignée « seuil unique de tension Uth' ». Cette expression est utilisée dans la mesure où ce deuxième mode de réalisation se distingue du mode de réalisation présenté aux figures 3 et 4 notamment en ce que la tension de l'alimentation auxiliaire U est comparée à un seul seuil de tension pour l'application du procédé.

Le mode ASC étant appliqué à partir de l'instant t2, la tension de l'alimentation auxiliaire U atteint et devient inférieur à la valeur Uth' à un instant t3".

Le mode ASC est alors maintenu pendant une première période T1 ayant une durée prédéfinie. La tension de l'alimentation auxiliaire U continue ainsi à descendre, et à l'issue de la première période T1, à un instant t4", le mode FW est appliqué à l'onduleur.

Il est notable que Uth et T1 sont choisis de sorte qu'à l'instant t4", le dispositif de contrôle de l'onduleur (et plus particulièrement le deuxième microcontrôleur dudit dispositif de contrôle) est actif car alimenté sous une tension supérieure à sa tension minimale de fonctionnement Umin.

L'application du mode FW induit un courant dans la machine électrique et dans l'onduleur, et provoque une remontée de la tension dans la partie du circuit haute tension de l'onduleur (bus haute tension), et donc dans les condensateurs de l'onduleur.

Avec l'applicaiton du mode FW, la tension U atteint le seuil unique de tension Uth', à un instant t5'. Le mode FW est alors maintenu pendant une deuxième période T2 ayant une durée prédéfinie. La tension de l'alimentation auxiliaire U continue ainsi à augmenter, et à l'issue de la deuxième période T2, à un instant t6", le mode ASC est appliqué à l'onduleur.

Il est notable que Uth et T2 sont choisis de sorte qu'à l'instant t6", la tension dans l'onduleur reste à un niveau acceptable, à savoir qu'elle est de préférence inférieure à la tension maximale admissible en mode de fonctionnement nominal de l'onduleur et plus généralement inférieure à la tension admissible par les composants de l'onduleur et plus généralement du système électrique mis en oeuvre.

Une nouvelle phase de fonctionnement en mode ASC démarre donc à l'instant t5'. Il en résulte une nouvelle impulsion de courant I2, ayant pour effet un nouvel échauffement des interrupteurs électroniques de l'étage de puissance.

Le mode ASC est poursuivi tant que la tension d'entrée de l'alimentation auxiliaire est supérieure au seuil de tension unique Uth', puis lorsque la tension d'entrée de l'alimentation auxiliaire passe sous le seuil de tension unique Uth' le mode ASC est maintenu pendant une nouvelle première période T1 (de durée identique à la précédente, ou variant selon une loi prédéterminée).

A l'issu de cette nouvelle première période T1, le mode FW est de nouveau appliqué. La tension remonte jusqu'à atteindre le seuil de tension unique Uth', et le mode FW est alors poursuivi pendant une nouvelle deuxième période T2 (de durée identique à la précédente, ou variant selon une loi prédéterminée).

Le procédé est poursuivi par une alternance des modes ASC et FW fondée sur la comparaison de la tension de l'alimentation auxiliaire U et du seuil unique de tension Uth' et l'écoulement avant de changer de mode d'une première période T1 à chaque fois que Uth' est atteint en mode ASC, et d'une deuxième période T2 à chaque fois que Uth' est atteint en mode FW.

Le deuxième mode de réalisation ainsi décrit offre les mêmes avantages que le mode de réalisation présenté en référence aux figures 3 et 4, mais est plus simple à mettre en oeuvre. Tout comme dans le mode de réalisaiton des figures 3 et 4, une condition alternative de passage en mode ASC par l'écoulement d'une durée prédéterminée depuis le passage en mode FW peut être appliquée pour éviter que l'onduleur reste en mode FW lorsque la vitesse de rotation de la machine électrique est insuffisante pour provoquer une hausse de la tension dans l'onduleur jusque Uth'.

Comme montré au graphique G6, l'application du procédé objet de la figure 5 permet de ralentir ou d'éviter la montée en température de l'étage de puissance de l'onduleur et en particulier de ses interrupteurs électroniques, en permettant un refroidissement suffisant entre les montées en température.

L'application du procédé permet également de maitriser le risque de surtension aux bornes des interrupteurs électroniques de l'onduleur (par exemple des IGBT), et évite les risques d'endommagement des interrupteurs par sur-tension.

Les modes de réalisation illustrés aux figures 3 à 6 se révèlent particulièrement performants, et mettent en oeuvre un dispositif de commande couramment utilisé qui comporte deux microcontrôleurs.

Néanmoins, pour certaines applications, et/ou afin de limiter les coûts, il est envisageable d'appliquer l'invention, selon certains modes de réalisations plus simples, avec un dispositif de commande ne comportant qu'un seul microcontrôleur.

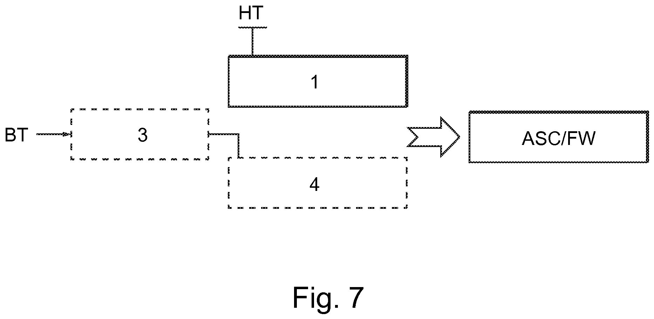

Un tel dispositif est représenté à la figure 7. Le dispositif de commande de la figure 7 est identique à celui de la figure 1, à la description de laquelle on peut donc se référer, à l'exception qu'il comporte un comparateur de tension 4 en lieu et place du deuxième microcontrôleur.

Le premier microcontrôleur 1 et le comparateur de tension 4 constituent donc collectivement un dispositif de contrôle permettant d'appliquer un mode de fonctionnement de sécurité à l'onduleur (en particulier le mode ASC ou le mode FW décrits précédemment).

En pratique, le comparateur de tension 4 n'est utilisé pour déterminer le mode de fonctionnement de sécurité à appliquer à l'onduleur qu'en cas d'incapacité pour le premier microcontrôleur d'assurer le pilotage de l'onduleur.

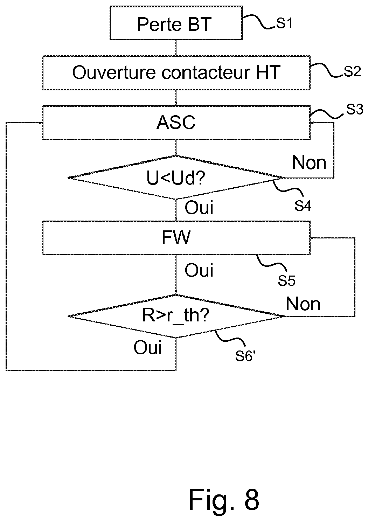

La figure 8 représente un mode de réalisation de l'invention compatible de la structure de dispositif de pilotage présentée à la figure 7.

Dans une première étape S1, une perte de l'alimentation basse tension se produit. Il en résulte l'ouverture du contacteur du circuit haute tension (deuxième étape S2).

Dans une troisième étape S3, le mode ASC est appliqué à l'onduleur. Il en résulte une décharge progressive de l'alimentation auxiliaire. Dans une quatrième étape S4 de comparaison, le comparateur de tension 4 compare la tension de l'alimentation auxiliaire U (par exemple mesurée sur un bus haute tension de l'onduleur) à la tension minimale donnée Ud. Tant que la tension U d'entrée de l'alimentation auxiliaire reste supérieure à la tension minimale donnée Ud, le mode ASC est maintenu. Mais dès que la tension d('entrée de l'alimentation auxiliaire U devient inférieure à la tension minimale donnée Ud, le deuxième microprocesseur applique le mode FW à l'onduleur (cinquième étape S5).

La tension remonte alors dans l'alimentation auxiliaire.

Dans une sixième étape S6, la tension de l'alimentation auxiliaire U est comparée, par le comparateur de tension 4, à un seuil de tension prédéfini Uth. Le mode FW est poursuivi tant que la tension de l'alimentation auxilaire U ne dépasse pas le seuil de tension prédéfini Uth.

Lorsque la tension de l'alimentation auxilaire U dépasse le seuil de tension prédéfini Uth, on compare la vitesse de rotation R de la machine électrique à la vitesse de rotation donnée r_th (étape de comparaison S6'). Si la vitesse de rotation R n'est plus supérieure à la vitesse de rotation donnée, le mode ASC ne s'impose plus et le mode FW est maintenu. Si la vitesse de rotation R est toujours supérieure à la vitesse de rotation donnée, le procédé retourne à la troisième étape S3 et le mode ASC est appliqué à l'onduleur.

Le mode de réalisation de la figure 8 garantit ainsi l'absence de montée en température trop importante de l'onduleur par un pilotage du mode FW fondé sur la tension de l'alimentation auxiliaire, comme expliqué en référence à la figure 4. L'absence de prise en compte d'un paramètre temporel pour repasser en mode ASC offre cependant moins de garantie quant à la décharge des condensateurs de l'onduleur une fois le véhicule équipé immobilisé.

Le mode de réalisation de la figure 8 est fondé sur la comparaison de la tension de l'alimentation auxiliaire U vis-à-vis de deux tensions prédéfinies, à savoir une tension minimale données Ud et un seuil de tension prédéfini Uth, tout comme le mode de réalisation détaillé en référence aux figures 3 et 4.

Un mode de réalisation analogue à celui des figures 5 et 6, dans lequel un seul microcontrôleur et un comparateur de tension sont utilisés peut également être appliqué avec une comparaison de la tension de l'alimentation auxiliaire U vis-à-vis d'un seuil unique de tension Uth', comme dans le mode de réalisation des figures 5 et 6.

L'invention ainsi développée permet par un contrôle de l'application du mode FW selon la tension de l'alimentation auxiliaire d'un dispositif de contrôleur d'un onduleur lié à une machine électrique, notamment d'une machine étectrique de traction d'un véhicule, de répondre à la problématique de la dégradation thermique d'un onduleur en cas de perte ou d'indisponibilité de l'alimentation basse tension de l'onduleur alors que la machine électrique liée à l'onduleur tourne à une vitesse importante. Ce résultat est obtenu tout en garantissant l'absence de dégradation par surtension. Selon certains modes de réalisation de l'invention, une décharge des condensateurs de l'onduleur à un niveau sécuritaire satisfaisant est néanmoins garantie.

## Revendications

1. Procédé de pilotage d'un onduleur comportant un étage de puissance comportant des interrupteurs électroniques, l'onduleur étant relié à une machine électrique de traction d'un véhicule, dans lequel,
selon un mode de fonctionnement nominal, l'onduleur est piloté par un dispositif de commande alimenté par une alimentation dite basse tension, abbrev. BT,
et dans lequel,
lorsqu'une perte de l'alimentation électrique basse tension (BT) se produit (S1), l'onduleur est déconnecté (S2) d'une alimentation électrique haute tension, abbrev. HT,
dont la tension électrique est supérieure à celle de l'alimentation électrique basse tension, et
le dispositif de commande est alimenté électriquement par une alimentation auxiliaire (3) qui comporte une capacité électrique, l'onduleur comportant ladite capacité électrique,
et dans lequel le dispositif de commande applique à l'onduleur un mode de fonctionnement de sécurité parmi :
- un mode de fonctionnement de sécurité dit mode active short circuit, abbrev. ASC, dans lequel certains interrupteurs électroniques de l'onduleur sont fermés de sorte à mettre des phases de la machine électrique en court-circuit, le mode ASC étant associé à une décharge active et ladite capacité électrique; et
- un mode de fonctionnement de sécurité dit mode free-wheel, abbrev. FW, dans lequel tous les interrupteurs électroniques sont ouverts, ce qui met la machine électrique en roue libre,
le procédé étant **caractérisé en ce que** ;
la tension (U) d'entrée de l'alimentation auxiliaire (3) est déterminée tout au long du fonctionnement de l'onduleur selon l'un des modes de fonctionnement de sécurité, et,
a) tandis que le dispositif de commande applique le mode ASC à l'onduleur, si la tension (U) d'entrée de l'alimentation auxiliaire chute sous une tension minimale donnée (S4), ladite tension minimale donnée (Ud) étant supérieure à une tension minimale de fonctionnement du dispositif de commande, le dispositif de commande applique alors le mode de fonctionnement FW à l'onduleur (S5), et
b) tandis que le dispositif de commande applique le mode FW à l'onduleur, si la tension (U) d'entrée de l'alimentation auxiliaire remonte jusqu'à un seuil de tension (Uth) prédéfini (S6), le dispositif de commande applique alors le mode de fonctionnement ASC à l'onduleur (S3) et l'étape a) est répétée.

2. Procédé de pilotage d'un onduleur selon la revendication 1, dans lequel :
à l'étape a), la condition selon laquelle la tension (U) d'entrée de l'alimentation auxiliaire chute sous une tension minimale donnée est remplie par le passage de la tension (U) d'entrée de l'alimentation auxiliaire sous un seuil unique de tension (Uth') suivi de la poursuite du mode ASC pendant une première période T1, et
à l'étape b), la condition selon laquelle la tension (U) d'entrée de l'alimentation auxiliaire remonte jusqu'à un seuil de tension prédéfini est remplie par le passage de la tension (U) d'entrée de l'alimentation auxiliaire au-dessus du seuil unique de tension (Uth') suivi de la poursuite du mode FW pendant une deuxième période T2.

3. Procédé de pilotage d'un onduleur selon la revendication 1 ou la revendication 2, dans lequel à l'étape b) le dispositif de commande applique le mode de fonctionnement ASC à l'onduleur après l'écoulement d'une durée prédéterminée depuis que le dispositif de commande a commencé à appliquer mode FW à l'onduleur (S7), même si la tension de l'alimentation haute tension (HT) ne remonte pas jusqu'au seuil de tension prédéfini (Uth).

4. Procédé de pilotage d'un onduleur selon la revendication 3, dans lequel ladite durée prédéterminée est de l'ordre de deux fois la constante de temps thermique (τ) de l'étage de puissance.

5. Procédé de pilotage d'un onduleur selon l'une des revendications 1 à 4, dans lequel la vitesse de rotation (R) de la machine électrique est déterminée tout au long du fonctionnement de l'onduleur selon l'un des modes de fonctionnement de sécurité et dans lequel, à l'étape b), le dispositif de commande n'applique le mode ASC à l'onduleur que si la vitesse de rotation (R) de la machine électrique est supérieure une vitesse de rotation donnée (r_th).

6. Procédé de pilotage selon l'une des revendications précédentes, dans lequel l'alimentation basse tension (BT) a une tension nominale de l'ordre de 12V, et l'alimentation haute tension HT a une tension nominale comprise entre 200V et 800V.

7. Procédé de pilotage d'un onduleur selon l'une des revendications précédentes, dans lequel la tension minimale donnée est comprise entre 20V et 60V.

8. Système comportant un onduleur relié à une machine électrique de traction d'un véhicule, et un dispositif de commande dudit onduleur, l'onduleur comportant un étage de puissance comportant des interrupteurs électroniques,
le dispositif de commande étant relié à une alimentation électrique dite basse tension assurant l'alimentation dudit dispositif de commande dans un mode de fonctionnement nominal de l'onduleur,
l'onduleur comportant une alimentation auxiliaire qui comporte une capacité électrique et qui est reliée à une alimentation électrique dite haute tension HT, dont la tension électrique est supérieure à celle de l'alimentation électrique basse tension,
ledit système étant configuré de sorte que lorsqu'une perte de l'alimentation électrique basse tension BT se produit, l'onduleur est déconnecté de l'alimentation électrique haute tension HT, le dispositif de commande étant alors alimenté par l'alimentation auxiliaire (3),
le dispositif de commande étant configuré pour appliquer dans ce cas à l'onduleur un mode de fonctionnement de sécurité parmi :
- un mode de fonctionnement de sécurité dit mode ASC dans lequel certains interrupteurs électroniques de l'onduleur sont fermés de sorte à mettre des phases de la machine électrique en court-circuit, associé à une décharge active et ladite capacité électrique,; et
- un mode de fonctionnement de sécurité dit mode FW dans lequel tous les interrupteurs électroniques sont ouverts, ce qui met la machine électrique en roue libre,
le système étant **caractérisé en ce qu'**il comporte un dispositif de détermination de la tension d'entrée de l'alimentation auxiliaire configuré pour déterminer ladite tension d'entrée de l'alimentation auxiliaire (3) tout au long du fonctionnement de l'onduleur selon un des modes de fonctionnement de sécurité,
et **en ce que** :
a) tandis que le dispositif de commande applique le mode ASC à l'onduleur, si la tension (U) de l'alimentation auxiliaire (3) chute sous une tension minimale donnée (Ud), ladite tension minimale donnée (Ud) étant supérieure à une tension minimale de fonctionnement du dispositif de commande, le dispositif de commande applique alors le mode de fonctionnement FW à l'onduleur, et
b) tandis que le dispositif de commande applique le mode FW à l'onduleur, si la tension d'entrée de l'alimentation auxiliaire remonte jusqu'à un seuil de tension prédéfini (Uth), le dispositif de commande applique alors le mode de fonctionnement ASC à l'onduleur et l'étape a) est répétée.

9. Système selon la revendication 7, dans lequel le dispositif de commande comporte :
- un premier calculateur électronique , alimenté par l'alimentation basse tension, et
- un deuxième calculateur électronique, alimenté par l'alimentation auxiliaire.

10. Système selon la revendication 8, dans lequel :
- le premier calculateur électronique est un premier microcontrôleur (1),
- le deuxième calculateur électronique est choisi parmi : un deuxième microcontrôleur (2), un circuit logique programmable, un microprocesseur.

11. Système selon la revendication 8, dans lequel le dispositif de commande comporte :
- un premier microcontrôleur (1), alimenté par l'alimentation basse tension (BT), et
- un comparateur de tension (4), alimenté par l'alimentation auxiliaire (3).

12. Système selon l'une des revendications 8 à 10, dans lequel ladite capacité électrique de l'alimentation auxiliaire est formée par un ou plusieurs condensateurs.

13. Système selon l'une des revendications 8 à 11, dans lequel les interrupteurs électroniques sont des IGBT.

14. Véhicule électrique comportant un système selon l'une des revendications 8 à 12.

## Patentansprüche

1. Verfahren zur Steuerung eines Wechselrichters, der eine Leistungsstufe umfasst elektronische Schalter, wobei der Wechselrichter an eine elektrische Traktionsmaschine eines Fahrzeugs angeschlossen ist, wobei
Entsprechend einer Soll-Betriebsart wird der Wechselrichter von einem Steuergerät gesteuert Steuerung mit Stromversorgung über ein sogenanntes Niederspannungsnetzteil, abgekürzt . BT,
und in dem,
wenn ein Ausfall der Niederspannungsversorgung (BT) auftritt (S1),
Der Wechselrichter ist von einer Hochspannungsversorgung getrennt (S2), abgekürzt HT, dessen elektrische Spannung höher ist als die der Niederspannungsversorgung Spannung und
die Steuervorrichtung wird von einer Hilfsstromversorgung (3) mit elektrischer Energie versorgt, die eine elektrische Kapazität umfasst, wobei der Wechselrichter diese elektrische Kapazität umfasst,
dem die Steuervorrichtung auf den Wechselrichter einen Sicherheitsbetriebsmodus anwendet unter :
- ein Sicherheitsbetriebsmodus namens aktiver Kurzschlussmodus, abgekürzt . ASC, bei dem bestimmte elektronische Schalter des Wechselrichters geschlossen werden, um Phasen zu schalten
der elektrischen Maschine im Kurzschluss, wobei der ASC-Modus mit einer aktiven Entladung und der genannten elektrischen Kapazität verbunden ist; Und
eine Sicherheitsbetriebsart namens Freilaufmodus , abgekürzt: FW,
bei dem alle elektronischen Schalter geöffnet sind, was die elektrische Maschine in den Freilauf versetzt,
wobei das Verfahren **dadurch gekennzeichnet** ist;
die Eingangsspannung (U) der Hilfsstromversorgung (3) während des gesamten Betriebs des Wechselrichters gemäß einer der Sicherheitsbetriebsarten ermittelt wird und,
während die Steuerung den ASC-Modus auf den Wechselrichter anwendet, wenn die Eingangsspannung (U) der Hilfsstromversorgung unter eine Mindestspannung fällt gegeben (S4), wobei die gegebene Mindestspannung (Ud) größer als eine Mindestbetriebsspannung der Steuervorrichtung ist, die Steuervorrichtung dann den FW-Betriebsmodus auf den Wechselrichter anwendet (S5), und
Während das Steuergerät den FW-Modus auf den Wechselrichter anwendet und die Eingangsspannung (U) der Hilfsstromversorgung auf einen vordefinierten Spannungsschwellenwert ( Uth ) ansteigt (S6), wendet das Steuergerät dann den ASC-Betriebsmodus auf den Wechselrichter an (S3). ) und Schritt a) wird wiederholt.

2. Verfahren zur Steuerung eines Wechselrichters nach Anspruch 1, bei dem:
in Schritt a) die Bedingung, nach der die Eingangsspannung (U) des Netzteils eingestellt wird
Der Hilfsabfall unter eine gegebene Mindestspannung wird durch den Übergang der Eingangsspannung (U) der Hilfsstromversorgung unter einen einzelnen Spannungsschwellenwert ( Uth ') ausgeglichen, gefolgt von der Fortsetzung des ASC-Modus während einer ersten Periode T1 und in Schritt b) die Bedingung, dass die Eingangsspannung (U) der Hilfsstromversorgung auf eine vordefinierte Spannungsschwelle ansteigt, wird durch den Übergang
der Eingangsspannung (U) der Hilfsstromversorgung über die einzelne Spannungsschwelle ( Uth ') erfüllt. ), gefolgt von der Fortsetzung des FW-Modus für einen zweiten Zeitraum T2.

3. Verfahren zur Steuerung eines Wechselrichters nach Anspruch 1 oder Anspruch 2, bei dem in Schritt b) die Steuervorrichtung den ASC-Betriebsmodus auf den Wechselrichter anwendet, nachdem eine vorgegebene Zeitspanne verstrichen ist, seit die Steuervorrichtung damit begonnen hat, den FW-Modus auf den Wechselrichter anzuwenden (S7), auch wenn die Spannung der Hochspannungsversorgung (HT) nicht auf die vordefinierte Spannungsschwelle ( Uth ) ansteigt.

4. Verfahren zur Steuerung eines Wechselrichters nach Anspruch 3, bei dem die vorgegebene Dauer in der Größenordnung des Doppelten der thermischen Zeitkonstante liegt
(T) der Leistungsstufe.

5. Verfahren zur Steuerung eines Wechselrichters nach einem der Ansprüche 1 bis 4, in bei dem die Drehzahl (R) der elektrischen Maschine während des gesamten Betriebs des Wechselrichters gemäß einem der Sicherheitsbetriebsmodi ermittelt wird und bei dem die Steuereinrichtung im Schritt b) den ASC-Modus nur dann nicht auf den Wechselrichter anwendet, wenn die Drehzahl (R) der elektrischen Maschine ist
größer als eine gegebene Drehzahl (r th).

6. Steuerungsverfahren nach einem der vorhergehenden Ansprüche, bei dem Das Niederspannungsnetzteil (BT) hat eine Nennspannung von etwa 12 V und
Das HT-Hochspannungsnetzteil hat eine Nennspannung zwischen 200 V und 800V

7. Verfahren zur Steuerung eines Wechselrichters nach einem der vorhergehenden Ansprüche,
bei dem die angegebene Mindestspannung zwischen 20V und 60V liegt.

8. System bestehend aus einem Wechselrichter, der mit einer elektrischen Traktionsmaschine eines verbunden ist
Fahrzeug und eine Vorrichtung zur Steuerung des Wechselrichters, wobei der Wechselrichter Folgendes umfasst:
Leistungsstufe mit elektronischen Schaltern, wobei das Steuergerät an ein sogenanntes Niederspannungsnetzteil angeschlossen ist, das die Stromversorgung des Steuergeräts im Nennbetriebsmodus des Wechselrichters gewährleistet,
wobei der Wechselrichter eine Hilfsstromversorgung mit einer
elektrischen Kapazität umfasst, die mit einer sogenannten Hochspannungs-^{HT}-Stromversorgung verbunden ist, deren elektrische Spannung größer ist als die der Niederspannungs-Stromversorgung,
Das System ist so konfiguriert, dass es bei einem Stromausfall funktioniert eine Niederspannungs-^{BT}-Stromversorgung auf, wird der Wechselrichter von der Stromversorgung getrennt
die Hochspannungs-^{HT}-Stromversorgung, wobei das Steuergerät dann von der Hilfsstromversorgung (3) gespeist wird,
wobei die Steuervorrichtung so konfiguriert ist, dass sie in diesem Fall einen Sicherheitsbetriebsmodus auf den Wechselrichter anwendet:
- einen Sicherheitsbetriebsmodus namens ASC-Modus, in dem bestimmte elektronische Schalter des Wechselrichters geschlossen sind, um Phasen der elektrischen Maschine kurzzuschließen, verbunden mit einer aktiven Entladung und der genannten elektrischen Kapazität; Und
- ein Sicherheitsbetriebsmodus namens FW-Modus, in dem alle
elektronische Schalter sind geöffnet, was die elektrische Maschine in den Freilauf versetzt
wobei das System **dadurch gekennzeichnet ist, dass** es eine Vorrichtung zur Bestimmung der Eingangsspannung der Hilfsstromversorgung umfasst, die dazu konfiguriert ist, die Eingangsspannung der Hilfsstromversorgung (3) während des gesamten Betriebs der zu bestimmen
den Wechselrichter entsprechend einer der Sicherheitsbetriebsarten,
und darin:
a) während der Controller den ASC-Modus auf den Wechselrichter anwendet, wenn Die Spannung (U) der Hilfsstromversorgung (3) unterschreitet eine vorgegebene Mindestspannung
(Ud), wobei die vorgegebene Mindestspannung (Ud) größer als eine Mindestspannung ist Betriebsmodus des Steuergeräts, das Steuergerät
wendet dann den FW-Betriebsmodus auf den Wechselrichter an, und
b) Während das Steuergerät den FW-Modus auf den Wechselrichter anwendet und die Eingangsspannung der Hilfsstromversorgung auf einen vordefinierten Spannungsschwellenwert ( Uth ) ansteigt, wendet das Steuergerät dann den FW-Modus-ASC-Betrieb auf den Wechselrichter an und Schritt a) wird wiederholt.

9. System nach Anspruch 7, bei dem die Steuervorrichtung beinhaltet:
- einen ersten elektronischen Computer, der von der Niederspannungsstromversorgung gespeist wird, und
- ein zweiter elektronischer Computer, der von der Hilfsstromversorgung gespeist wird.

10. System nach Anspruch 8, bei dem:
- der erste elektronische Rechner ein erster Mikrocontroller (1) ist,
- Der zweite elektronische Computer wird ausgewählt aus: einem zweiten Mikrocontroller (2), eine programmierbare Logikschaltung, ein Mikroprozessor.

11. System nach Anspruch 8, bei dem die Steuervorrichtung umfasst:
- einen ersten Mikrocontroller (1), der von der Niederspannungsstromversorgung (BT) gespeist wird, und - einen Spannungskomparator (4), der von der Hilfsstromversorgung (3) gespeist wird.

12. System nach einem der Ansprüche 8 bis 10, bei dem die elektrische Kapazität der Hilfsstromversorgung durch einen oder mehrere Kondensatoren gebildet wird.

13. System nach einem der Ansprüche 8 bis 11, bei dem die Schalter Elektronik ist IGBT.

14. Elektrofahrzeug umfassend ein System nach einem der Ansprüche 8 bis 12.

## Claims

1. Method for controlling an inverter comprising a power stage comprising electronic switches, the inverter being connected to an electric traction machine of a vehicle, in which,
In a nominal operating mode, the inverter is controlled by a devicecontrol powered by a so-called low voltage power supply, abbrev. BT,
and in which,
when a loss of low voltage (LV) power supply occurs (S1),
the inverter is disconnected (S2) from a high voltage power supply, abbrev.
HT,
whose electrical voltage is higher than that of the low power supply tension, and
the control device is electrically powered by an auxiliary power supply (3) which comprises an electrical capacity, the inverter comprising said electrical capacity,
and in which the control device applies to the inverter a safety operating mode among:
- a safety operating mode called active short circuit mode, abbrev. ASC, in which certain electronic switches of the inverter are closed so as to put phases
of the short-circuited electrical machine, the ASC mode being associated with an active discharge and said electrical capacity; and
- a safety operating mode called free-wheel mode, abbrev. FW,
in which all electronic switches are open, which sets the electric machine into freewheeling,
the method being **characterized in that**;
the input voltage (U) of the auxiliary power supply (3) is determined throughout the operation of the inverter according to one of the safety operating modes, and,
while the control device applies the ASC mode to the inverter, if the input voltage (U) of the auxiliary power supply drops below a minimum voltage
given (S4), said given minimum voltage (Ud) being greater than a
minimum operating voltage of the control device, the control device then applies the FW operating mode to the inverter (S5), and
while the controller applies the FW mode to the inverter, if the input voltage (U) of the auxiliary power supply rises to a predefined voltage threshold (Uth) (S6), the controller then applies the ASC operating mode to the inverter (S3) and step a) is repeated.

2. Method for controlling an inverter according to claim 1, in which:
in step a), the condition that the input voltage (U) of the power supply auxiliary power supply drops below a given minimum voltage is met by the auxiliary power supply input voltage (U) falling below a single voltage threshold (Uth') followed by the continuation of the ASC mode for a first period T1, and in step b), the condition that the auxiliary power supply input voltage (U) rises to a predefined voltage threshold is met by the auxiliary power supply input voltage (U) rising above the single voltage threshold (Uth') followed by the continuation of the FW mode for a second period T2.

3. Method of controlling an inverter according to claim 1 or claim 2,
wherein in step b) the control device applies the mode of ASC operation to the inverter after a predetermined time has elapsed since the controller started applying FW mode to the inverter (S7), even if the high voltage (HV) supply voltage does not rise to the predefined voltage threshold (Uth).

4. A method of controlling an inverter according to claim 3, wherein said predetermined duration is of the order of twice the thermal time constant.
(T) of the power stage.

5. Method for controlling an inverter according to one of claims 1 to 4, in in which the rotational speed (R) of the electrical machine is determined throughout the operation of the inverter according to one of the safety operating modes and in which, in step b), the control device only applies the ASC mode to the inverter if the rotational speed (R) of the electrical machine is
greater than a given rotation speed (r th).

6. Control method according to one of the preceding claims, in which
the low voltage (LV) power supply has a nominal voltage of around 12V, and
The high voltage HT power supply has a nominal voltage between 200V and 800V

7. Method for controlling an inverter according to one of the preceding claims, in which the given minimum voltage is between 20V and 60V.

8. System comprising an inverter connected to an electric traction machine of a vehicle, and a device for controlling said inverter, the inverter comprising a power stage comprising electronic switches, the control device being connected to a so-called low voltage power supply ensuring the power supply of said control device in a nominal operating mode of the inverter,
the inverter comprising an auxiliary power supply which comprises an electrical capacity and which is connected to a so-called high voltage HT electrical power supply, the electrical voltage of which is higher than that of the low voltage electrical power supply, said system being configured so that when a loss of power supply low voltage electrical fault BT occurs, the inverter is disconnected from the high voltage HT power supply, the control device then being supplied by the auxiliary power supply (3),
the control device being configured to apply in this case to the inverter a safety operating mode among:
- a safety operating mode called ASC mode in which certain electronic switches of the inverter are closed so as to short-circuit phases of the electrical machine, associated with an active discharge and said electrical capacity; and
- a safety operating mode called FW mode in which all the electronic switches are opened, which sets the electric machine into freewheel mode,
the system being **characterized in that** it comprises a device for determining the input voltage of the auxiliary power supply configured to determine said input voltage of the auxiliary power supply (3) throughout the operation of
the inverter according to one of the safety operating modes,
and that:
a) while the control device applies ASC mode to the inverter, if the voltage (U) of the auxiliary power supply (3) drops below a given minimum voltage (Ud), said given minimum voltage (Ud) being greater than a minimum voltage operating mode of the controller, the controller then applies the FW operating mode to the inverter, and
b) while the controller applies the FW mode to the inverter, if the input voltage of the auxiliary power supply rises again to a predefined voltage threshold (Uth), the controller then applies the ASC operating mode to the inverter and step a) is repeated.

9. The system of claim 7, wherein the control device includes:
- a first electronic calculator, powered by the low voltage power supply, and
- a second electronic calculator, powered by the auxiliary power supply.

10. The system of claim 8, wherein:
- the first electronic calculator is a first microcontroller (1),
- the second electronic calculator is chosen from: a second microcontroller (2), a programmable logic circuit, a microprocessor.

11. The system of claim 8, wherein the control device comprises:
- a first microcontroller (1), powered by the low voltage (LV) power supply, and - a voltage comparator (4), powered by the auxiliary power supply (3).

12. System according to one of claims 8 to 10, in which said electrical capacity of the auxiliary power supply is formed by one or more capacitors.

13. System according to one of claims 8 to 11, in which the switches
electronics are IGBTs.

14. Electric vehicle comprising a system according to one of claims 8 to 12.
